# FASCICULE DE BREVET EUROPEEN

(11) **EP 3 837 162 B1**
(45) Date de publication et mention de la délivrance du brevet: **11.02.2026**
(21) Numéro de dépôt: 19749756.3
(22) Date de dépôt: 12.08.2019
(51) Int. Cl.: B63C 11/48, B63G 8/42

(54) **SYSTÈME D'EXPLORATION SOUS-MARINE PAR UN ENGIN IMMERGÉ À PRODUCTION LOCALE D'ÉNERGIE ÉLECTRIQUE ET REMORQUÉ PAR UN NAVIRE DE SURFACE**
UNTERWASSEREXPLORATIONSSYSTEM UNTER VERWENDUNG EINER UNTERWASSERVORRICHTUNG MIT LOKALER ERZEUGUNG VON ELEKTRISCHER ENERGIE UND GESCHLEPPTEM UNTERWASSERSCHIFF
SYSTEM FOR UNDERWATER EXPLORATION USING A SUBMERGED DEVICE HAVING LOCAL PRODUCTION OF ELECTRICAL ENERGY AND TOWED BY A SURFACE VESSEL

(30) Priorité: 13.08.2018 FR 1857481
(43) Date de publication de la demande: 23.06.2021
(73) Titulaire: EXAIL, 78100 Saint-Germain-en-Laye (FR)
(72) Inventeur: GRALL, Sébastien, 78100 Saint-Germain-en-Laye (FR)
(74) Mandataire: Jacobacci Coralis Harle
(86) Numéro de dépôt international: PCT/EP2019/071566
(87) Numéro de publication internationale: WO 2020/035438

(56) Documents cités:
- FR-A1- 2 912 818
- US-A1- 2007 046 028
- US-A1- 2010 326 343
- US-A1- 2014 090 590

## Description

### DOMAINE TECHNIQUE AUQUEL SE RAPPORTE L'INVENTION

La présente invention concerne de manière générale le domaine des systèmes subaquatiques d'exploration, de surveillance et de mesures, ainsi que le domaine de la défense navale. Elle concerne plus particulièrement un système d'exploration sous-marine par un engin immergé à production locale d'énergie électrique et qui est remorqué par un navire de surface.

### ARRIERE-PLAN TECHNOLOGIQUE

Il est tout à fait habituel lors de campagnes de mesure ou de recherche en mer, de déployer un engin immergé qui est remorqué par un navire de surface. L'engin immergé, qui est aussi dénommé poisson, est remorqué et porte généralement des équipements tels que des sonars, des sondeurs, des sondeurs multi faisceaux, des sondeurs de sédiments, des magnétomètres et toutes sortes de matériels servant à relever des données en mer. Il arrive quelquefois que l'on utilise en amont du poisson portant les équipements (c'est-à-dire côté navire de remorquage par rapport à l'engin), sur la ligne de remorquage, un appareillage permettant de mieux contrôler la trajectoire de l'ensemble. Cet appareillage peut être soit un simple poids mort, soit un dépresseur. Le dépresseur utilise sa portance hydrodynamique pour entrainer la ligne de remorquage vers le fond et il peut être passif ou actif et, dans ce dernier cas, il modifie sa géométrie pour ajuster sa trajectoire. Cet appareillage peut aussi être une combinaison d'un poids mort et d'un dépresseur.

Les équipements d'acquisition de données qui sont tractés sont consommateurs d'énergie électrique. La plupart du temps, cette énergie électrique est stockée et/ou produite par le navire de surface remorqueur et elle est conduite jusqu'aux équipements par la ligne de remorquage qui combine dans ce cas les fonctions de traction/remorquage, électro-portage pour l'alimentation électrique provenant du navire, et, en général, aussi de transfert de données. Cet électro-portage s'effectue par un câblage électrique en courant fort.

Il en résulte que la ligne de remorquage est lourde et volumineuse et elle constitue une part très importante de la trainée générée par l'ensemble remorqué. Dans le cas de remorquage en grande profondeur, la ligne de remorquage constitue même le principal de la trainée.

On connait des engins sous-marins à hydrogénérateurs électriques par les documents US 2007/046028 A1, US 2014/090590 A1 et FR 2 912 818 A1.

### OBJET DE L'INVENTION

Afin de remédier aux inconvénients précités de l'état de la technique, la présente invention propose d'utiliser des moyens de production de l'énergie électrique au plus près du lieu de consommation afin de supprimer l'électro-portage dans la ligne de remorquage. On propose donc de munir l'engin/poisson et/ou le dépresseur et/ou le poids mort d'au moins un hydrogénérateur producteur d'énergie électrique et pouvant donc produire du courant électrique. Cette production d'énergie électrique est obtenue en utilisant et convertissant l'énergie mécanique du flux d'eau qui passe par l'hydrogénérateur du fait que l'élément qui le porte est remorqué et se déplace dans l'eau.

Ainsi, l'invention concerne tout d'abord, un système d'exploration sous-marine selon la revendication 1.

D'autres caractéristiques matérielles et fonctionnelles non limitatives et avantageuses du système conforme à l'invention, prises individuellement ou selon toutes les combinaisons techniquement possibles, sont les suivantes :
- le système comporte seulement l'engin immergé sur la ligne de remorquage,
- le système comporte l'engin immergé et un dépresseur sur la ligne de remorquage,
- le système comporte l'engin immergé et un poids mort sur la ligne de remorquage,
- le système comporte l'engin immergé, un dépresseur et un poids mort sur la ligne de remorquage,
- l'engin, le dépresseur et le poids mort sont immergés,
- l'hydrogénérateur est un dispositif purement producteur d'électricité, non moteur,
- l'hydrogénérateur réversible est un propulseur de l'engin immergé,
- l'engin immergé comporte une batterie rechargeable de stockage d'énergie électrique, ladite batterie étant rechargée et maintenue en charge par l'hydrogénérateur,
- la ligne de remorquage comporte une liaison de communication de données
   entre le navire et l'engin immergé,
- la ligne de remorquage comporte une liaison de communication de données entre le navire et le dépresseur,
- la ligne de remorquage comporte une liaison de communication de données entre le navire et le poids mort,
- la ligne de remorquage comporte une liaison de communication de données entre le dépresseur et le poids mort,
- la ligne de remorquage comporte une liaison de communication de données entre l'engin immergé et le dépresseur,
- la ligne de remorquage comporte une liaison de communication de données entre l'engin immergé et le poids mort,
- la liaison de communication de données est choisie parmi les liaisons par fils conducteurs électriques, par fibre optique,
- la liaison de communication de données par liaison par fils conducteurs électriques est en courant faible,
- le système comporte en outre un poids mort le long de la ligne de remorquage et le poids mort comporte au moins un hydrogénérateur,
- le poids mort à hydrogénérateur(s) alimente en énergie électrique l'engin immergé, une liaison d'alimentation électrique étant étendue entre le poids mort et l'engin immergé,
- le système comporte en outre un dépresseur le long de la ligne de remorquage et le dépresseur comporte au moins un hydrogénérateur,
- le dépresseur à hydrogénérateur(s) alimente en énergie électrique l'engin immergé, une liaison d'alimentation électrique étant étendue entre le dépresseur et l'engin immergé,
- le dépresseur est passif,
- le dépresseur est actif et peut modifier sa géométrie,
- le poids mort et le dépresseur sont réunis en un seul dispositif fonctionnel,
- l'hydrogénérateur comporte une hélice ou une turbine,
- l'hydrogénérateur est orientable,
- le navire comporte un enrouleur/dérouleur de la ligne de remorquage,
- le navire et/ou le dépresseur et/ou l'engin immergé comporte des gouvernes distinctes d'éventuels moyens de propulsion, les gouvernes étant choisies parmi notamment les gouvernails, ailerons, volets,
- l'engin immergé ne comporte pas de moyen de propulsion propre/intégré,
- le dépresseur ne comporte pas de moyen de propulsion propre/intégré,
- l'engin immergé comporte un moyen de propulsion,
- le dépresseur comporte un moyen de propulsion,
- le navire comporte un moyen de propulsion,
- le moyen de propulsion est un propulseur distinct de l'hydrogénérateur,
- le moyen de propulsion est un hydrogénérateur réversible,
- l'hydrogénérateur réversible est une gouverne en mode propulsion,
- l'engin et/ou le dépresseur et/ou le poids mort comportent chacun un plan médian antéropostérieur vertical et dans le cas de l'utilisation d'un seul hydrogénérateur ce dernier est disposé le long dudit plan médian antéropostérieur,
- l'engin et/ou le dépresseur et/ou le poids mort comportent chacun un plan médian antéropostérieur vertical et dans le cas de l'utilisation de deux hydrogénérateurs ces derniers sont disposés symétriquement latéralement de part et d'autre dudit plan médian antéropostérieur,
- l'engin et/ou le dépresseur et/ou le poids mort comportent chacun un plan médian antéropostérieur vertical et dans le cas de l'utilisation de trois hydrogénérateurs, deux de ces derniers sont disposés symétriquement latéralement de part et d'autre dudit plan médian antéropostérieur et le troisième est disposé le long dudit plan médian antéropostérieur.

L'invention propose également un engin immergé spécialement configuré pour le système de l'invention et qui comporte au moins un hydrogénérateur. L'engin immergé peut être réalisé selon toutes les modalités mentionnées.

L'invention propose également un dépresseur spécialement configuré pour le système de l'invention et qui comporte au moins un hydrogénérateur. Le dépresseur peut être réalisé selon toutes les modalités mentionnées.

L'invention propose enfin un poids-mort spécialement configuré pour le système de l'invention et qui comporte au moins un hydrogénérateur. Le poids-mort peut être réalisé selon toutes les modalités mentionnées.

La solution proposée permet de ne plus utiliser de câble pour courant fort dans la ligne de remorquage et, de ce fait, d'en réduire considérablement le diamètre et le poids. En outre, en supprimant l'électro-portage de la ligne de remorquage, il est possible de supprimer les contacts électriques tournant du treuil d'enroulement/déroulement de la ligne de remorquage qui sont dans un dispositif coûteux et qui sont peu fiables.

D'autre part, la dimension du treuil sur lequel la ligne de remorquage est enroulée augmente en fonction du diamètre de la ligne de remorquage et de la force de traction à exercer. Cette force de traction est proportionnelle à la trainée de l'ensemble remorqué. En supprimant la fonction de convoyage d'énergie, on peut aussi diminuer la dimension et donc le coût du treuil mais aussi son encombrement et son poids et, par conséquent, potentiellement la dimension du navire porteur.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un engin immergé, sous-marin, remorqué comportant deux hydrogénérateurs électriques, et
- la figure 2 représente un dépresseur actif sur ligne de remorquage et comportant deux hydrogénérateurs électriques.

### Dispositif

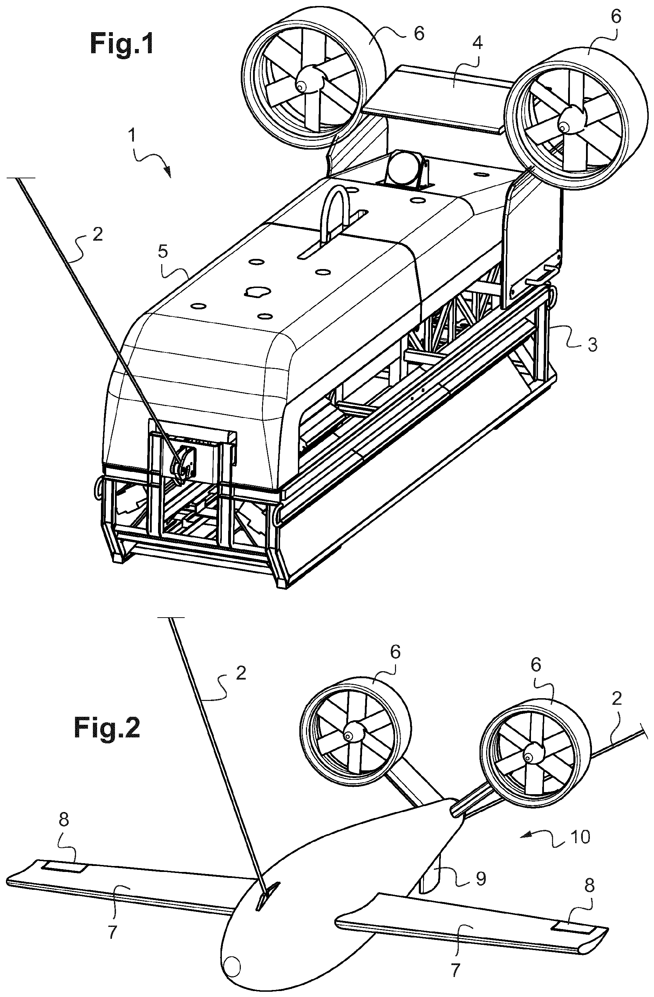

Sur la figure 1, on a représenté un exemple d'engin 1 immergé, sous-marin, remorqué en bout de ligne de remorquage 2. Cet engin immergé peut être remonté à la surface et amené à bord du navire de remorquage. A cette fin, le navire de remorquage (non représenté) comporte un treuil enrouleur/dérouleur de la ligne de remorquage et des moyens de mise à l'eau et d'embarquement de l'engin immergé.

L'engin 1 immergé comporte un châssis 3 et un carénage 5 ainsi que des moyens de guidage comme une gouverne de profondeur 4 à l'arrière. L'engin 1 immergé comporte également deux hydrogénérateurs 6 électriques produisant de l'énergie électrique qui sert à alimenter les équipements électriques de l'engin immergé. Les hydrogénérateurs sont placés autour, mais dans d'autres modalités dans, de l'engin immergé de manière à pouvoir efficacement utiliser et convertir l'énergie mécanique de l'écoulement de l'eau lors du remorquage de l'engin immergé.

Dans l'exemple représenté les hydrogénérateurs sont à pales/hélices, ces deux termes étant considérés équivalents dans le contexte de l'invention, mais dans d'autres modalités il peut s'agir de turbines ou de tout autre moyen équivalent. L'orientation et/ou le pas des pales/hélices, ou des autres moyens est ici fixe mais dans d'autres modalités, il peut être variable pour pouvoir ajuster la trainée et/ou la production d'énergie électrique. Le générateur électrique qui est relié aux pales/hélices ou autres, est de tout type compatible : alternateur, dynamo... pour produire un courant qui est adapté aux besoins, continu, alternatif, polyphasé ou non. Des moyens de régulation de la production électrique au niveau de l'hydrogénérateur peuvent être mis en œuvre, soit comme précédemment indiqué au niveau des pales/hélices, soit dans le générateur lui-même par exemple en jouant sur un champ magnétique et/ou des inducteurs.

Dans une modalité de réalisation plus évoluée, les hydrogénérateurs sont réversibles et peuvent fonctionner en propulseurs, plus pour orienter l'engin immergé que pour le propulser proprement dit car il est normalement remorqué. Toutefois, cette possibilité de propulsion peut être utile dans certains cas, par exemple en cas de défaillance d'un élément du système d'exploration pour rapprocher ou ramener l'engin vers le navire si le rapatriement normal de l'engin immergé par treuillage est impossible. Il est également envisagé d'utiliser une différence de trainée entre les deux hydrogénérateurs pour crée une force de rotation de l'engin immergé, l'un des deux étant par exemple déconnecté de la production d'électricité et ses pales/hélices étant laissées libres de tourner.

Sur la figure 2, on a représenté un exemple de dépresseur 10 installé sur la ligne de remorquage 2. Ce dépresseur 10 est actif et comporte une quille ou un gouvernail 9 et des ailerons 7 comportant des gouvernes de profondeur 8, ces dernières étant orientables. Le dépresseur 10 comporte deux hydrogénérateurs 6 électriques produisant de l'énergie électrique qui sert à alimenter les moyens actifs du dépresseur.

La quille ou gouvernail 9 et même les gouvernes 8 peuvent être utiles au cas où la trainée d'un des deux hydrogénérateurs serait différente de l'autre, par exemple un objet bloquant l'une d'elles, afin de contrer la force de rotation qui en résulterait. On peut également utiliser une différence volontaire de trainée des deux hydrogénérateurs produisant de l'électricité pour obtenir un effet d'orientation. On comprend que cela est possible du fait de la présence de deux hydrogénérateurs et qui sont à distance d'un plan ou axe principal de l'engin ou du dépresseur, cette différence créant une force résultante de rotation.

Comme pour l'engin, on peut dans une modalité de réalisation plus évoluée, mettre en œuvre des hydrogénérateurs qui sont réversibles et peuvent fonctionner en propulseurs. Dans le cas où l'hydrogénérateur est réversible, outre la trainée, l'effet de propulsion peut également être utilisé pour l'orientation du dépresseur.

## Revendications

1. Système d'exploration sous-marine comportant un engin (1) immergé et une ligne de remorquage (2), l'engin (1) immergé étant adapté à être remorqué par la ligne de remorquage (2), la ligne de remorquage (2) étant adaptée à être reliée à un navire de surface, l'engin (1) immergé comportant des équipements alimentés par l'électricité et au moins un dispositif de production locale d'énergie électrique, ledit dispositif étant un hydrogénérateur (6) électrique et la ligne de remorquage (2) est dépourvue de câble d'alimentation électrique reliant le navire à l'engin immergé, **caractérisé en ce que** l'hydrogénérateur (6) est réversible et est un générateur-moteur sélectionnable et pouvant, selon la sélection, produire de l'électricité ou pouvant consommer de l'électricité en produisant un travail mécanique pour guider et/ou propulser l'engin (1) immergé.

2. Système selon la revendication 1, **caractérisé en ce que** l'engin (1) immergé comporte une batterie rechargeable de stockage d'énergie électrique, ladite batterie étant rechargée et maintenue en charge par l'hydrogénérateur (6).

3. Système selon l'une quelconque des revendications précédentes, **caractérisé en ce que** la ligne de remorquage (2) comporte une liaison de communication de données entre le navire et l'engin (1) immergé.

4. Système selon la revendication 3, **caractérisé en ce que** la liaison de communication de données est choisie parmi les liaisons par fils conducteurs électriques, par fibre optique.

5. Système selon l'une quelconque des revendications précédentes, **caractérisé en ce que** qu'il comporte en outre un poids mort le long de la ligne de remorquage (2) et **en ce que** le poids mort comporte au moins un hydrogénérateur (6).

6. Système selon l'une quelconque des revendications précédentes, **caractérisé en ce que** qu'il comporte en outre un dépresseur (10) le long de la ligne de remorquage (2) et **en ce que** le dépresseur (10) comporte au moins un hydrogénérateur (6).

7. Système selon les revendications 5 et 6, **caractérisé en ce que** le poids mort et le dépresseur sont réunis en un seul dispositif fonctionnel.

8. Système selon l'une quelconque des revendications précédentes, **caractérisé en ce que** l'hydrogénérateur (6) comporte une hélice ou une turbine.

9. Système selon l'une quelconque des revendications précédentes, **caractérisé en ce que** l'hydrogénérateur (6) est orientable.

10. Système selon l'une quelconque des revendications précédentes, **caractérisé en ce que** le système comporte un navire et que le navire comporte un enrouleur/dérouleur de la ligne de remorquage.

## Patentansprüche

1. Unterwasserexplorationssystem mit einer Unterwasservorrichtung (1) und einem Schleppseil (2), wobei die Unterwasservorrichtung (1) dazu ausgelegt ist, mit dem Schleppseil (2) geschleppt zu werden, wobei das Schleppseil (2) dazu ausgelegt ist, mit einem Überwasserschiff verbunden zu werden, wobei die Unterwasservorrichtung (1) mit Strom versorgte Ausrüstungen und mindestens eine Vorrichtung zur Erzeugung elektrischer Energie vor Ort aufweist, wobei die Vorrichtung ein elektrischer Hydrogenerator (5) ist und das Schleppseil (2) keine das Schiff mit der Unterwasservorrichtung verbindende elektrische Versorgungsleitung aufweist, **dadurch gekennzeichnet, daß** der Hydrogenerator (6) umkehrbar ist und ein wählbarer Motorgenerator ist, der je nach Wahl Elektrizität erzeugen kann oder Elektrizität durch Leisten mechanischer Arbeit zum Führen und/oder Antreiben der Unterwasservorrichtung (1) verbrauchen kann.

2. System gemäß Anspruch 1, **dadurch gekennzeichnet, daß** die Unterwasservorrichtung (1) eine aufladbare Batterie zum Speichern elektrischer Energie aufweist, wobei die Batterie durch den Hydrogenerator (6) wiederaufgeladen und geladen gehalten wird.

3. System gemäß einem der vorangehenden Ansprüche, **dadurch gekennzeichnet, daß** das Schleppseil (2) eine Datenübertragungsverbindung zwischen dem Schiff und der Unterwasservorrichtung (1) aufweist.

4. System gemäß Anspruch 3, **dadurch gekennzeichnet, daß** die Datenübertragungsverbindung unter den Verbindungen durch elektrische Leiter und durch optische Fasern ausgewählt ist.

5. System gemäß einem der vorangehenden Ansprüche, **dadurch gekennzeichnet, daß** es außerdem entlang des Schleppseils (2) ein Totgewicht aufweist und daß das Totgewicht mindestens einen Hydrogenerator (6) aufweist.

6. System gemäß einem der vorangehenden Ansprüche, **dadurch gekennzeichnet, daß** es außerdem entlang des Schleppseils (2) eine Vakuumpumpe (10) aufweist und daß die Vakuumpumpe (10) mindestens einen Hydrogenerator (6) aufweist.

7. System gemäß den Ansprüchen 5 und 6, **dadurch gekennzeichnet, daß** das Totgewicht und die Vakuumpumpe in einer einzigen Funktionsvorrichtung vereinigt sind.

8. System gemäß einem der vorangehenden Ansprüche, **dadurch gekennzeichnet, daß** der Hydrogenerator (6) einen Propeller oder eine Turbine aufweist.

9. System gemäß einem der vorangehenden Ansprüche, **dadurch gekennzeichnet, daß** der Hydrogenerator (6) orientierbar ist.

10. System gemäß einem der vorangehenden Ansprüche, **dadurch gekennzeichnet, daß** das System ein Schiff aufweist und daß das Schiff einen Aufroller/Abroller des Schleppseils aufweist.

## Claims

1. System for underwater exploration comprising a submerged vehicle (1) and a towing line (2), the submerged vehicle (1) being adapted to be towed by the towing line (2), the towing line (2) being adapted to be connected to a surface vessel, the submerged vehicle (1) comprising equipment powered by electricity and at least one device for local production of electrical energy, said device being an electric hydrogenerator (6) and the towing line (2) having no power supply cable connecting the vessel to the submerged vehicle, **characterized in that** the hydrogenerator (6) is reversible and is a selectable generator-motor that is able, according to the selection, to produce electricity or to consume electricity by producing a mechanical work to guide and/or propel the submerged vehicle (1).

2. System according to claim 1, **characterized in that** the submerged vehicle (1) comprises a rechargeable battery for storing the electrical energy, said battery being charged and maintained charged by the hydrogenerator (6).

3. System according to any one of the preceding claims, **characterized in that** the towing line (2) comprises a data communication link between the vessel and the submerged vehicle (1).

4. System according to claim 3, **characterized in that** the data communication link is chosen among electrical conductor, fibre-optic links.

5. System according to any one of the preceding claims, **characterized in that** it further comprises a dead weight along the towing line (2) and **in that** the dead weight comprises at least one hydrogenerator (6).

6. System according to any one of the preceding claims, **characterized in that** it further comprises a depressor (10) along the towing line (2) and **in that** the depressor (10) comprises at least one hydrogenerator (6).

7. System according to claims 5 and 6, **characterized in that** the dead weight and the depressor are gathered into a single functional device.

8. System according to any one of the preceding claims, **characterized in that** the hydrogenerator (6) comprises a propellor or a turbine.

9. System according to any one of the preceding claims, **characterized in that** the hydrogenerator (6) is steerable.

10. System according to any one of the preceding claims, **characterized in that** the system comprises a vessel and that the vessel comprises a towing line winder/unwinder.
